# EUROPEAN PATENT APPLICATION

(11) **EP 4 797 370 A1**
(43) Date of publication of application: **26.08.2026**
(21) Application number: 24880996.4
(22) Date of filing: 15.05.2024
(51) Int. Cl.: H01M 10/0567, H01M 10/42, H01M 10/0525, H01M 10/058, H01M 10/0568

(54) **NON-AQUEOUS ELECTROLYTE AND QUICK-CHARGING SECONDARY BATTERY**

(30) Priority: 26.10.2023 CN 202311401645
(71) Applicant: SVOLT Energy Technology Co., Ltd., Changzhou, Jiangsu 213200 (CN)
(72) Inventor: WANG, Yingying, hangzhou, Jiangsu 213200 (CN); PANG, Chunguang, hangzhou, Jiangsu 213200 (CN); LIU, Jing, hangzhou, Jiangsu 213200 (CN); YANG, Hongxin, hangzhou, Jiangsu 213200 (CN)
(74) Representative: Michalski Hüttermann & Partner mbB
(86) International application number: PCT/CN2024/093441
(87) International publication number: WO 2025/086617

(57) **Abstract**

A non-aqueous electrolyte and a fast-charging secondary battery. The non-aqueous electrolyte comprises a primary injection electrolyte and a secondary injection electrolyte. The primary injection electrolyte comprises a mixed lithium salt, a carboxylic acid ester solvent, and a primary additive. The primary additive comprises vinylene carbonate and fluoroethylene carbonate. Based on a mass of the primary injection electrolyte, a mass percentage content of the vinylene carbonate is A%, and a mass percentage content of the fluoroethylene carbonate is B%, satisfying the following conditions: a value of A+B ranges from 1 to 6. The secondary injection electrolyte comprises a secondary additive, and the secondary additive comprises vinylene carbonate. Based on a mass of the secondary injection electrolyte, a mass percentage content of the vinylene carbonate is C%, satisfying the following conditions: a value of (A+B)/C ranges from 0.06 to 0.48. The non-aqueous electrolyte is applicable to fast-charging and wide-temperature secondary battery systems.

## Description

### CROSS REFERENCE TO RELATED APPLICATION

The present application claims priority to Chinese Patent Application No. 202311401645.1, filed with the China National Intellectual Property Administration on October 26, 2023, which is incorporated herein by reference in entirety.

### TECHNICAL FIELD

The present application belongs to the technical field of electrolyte materials, and specifically relates to a non-aqueous electrolyte and a fast-charging secondary battery.

### BACKGROUND ART

Currently, a lithium-ion battery system has the highest specific energy and the best cycling performance among commercialized secondary batteries. Moreover, due to the diversity of electrode material selection, the lithium-ion battery system has broad development prospects as an energy storage battery. In recent years, positive electrode materials of power batteries mainly include the following three types: the first is lithium iron phosphate materials (abbreviated as LFP); the second is lithium manganese oxide materials (abbreviated as LMO); and the third is ternary materials (lithium nickel cobalt aluminum oxide (abbreviated as NCA) and lithium nickel cobalt manganese oxide (abbreviated as NCM)).

With the rapid development of new energy vehicles, people have put forward higher requirements for a driving range, a charging speed, and safety performance of electric vehicles. However, a lithium iron phosphate battery system suffers from a relatively low energy density, a relatively slow charge/discharge rate, and a relatively poor performance at low temperatures, resulting in a relatively small application share in a high-performance electric vehicle market. In order to improve the energy density of lithium iron phosphate batteries, the main methods used by researchers includes fabricating thick electrodes. By increasing a thickness of an electrode, a mass proportion of active materials significantly increases, thereby improving the energy density of a cell.

Although the above-mentioned methods can increase an areal density of the electrode, kinetic performance of the cell decreases to some extent. Related technologies disclose that by adjusting compositions of the electrolyte, the energy density can be improved while maintaining the fast-charging capability of the cell. Related technologies mainly disclose the following technical solutions: Firstly, lithium bis(fluorosulfonyl)imide salt is used to replace a part of lithium hexafluorophosphate salt, thereby enhancing the ionic conductivity of the battery, ensuring the fast-charging and cycling performance thereof. Secondly, sufficient additives are added to the electrolyte, allowing to form a thin and stable SEI film on a negative electrode surface, thereby effectively reducing the diffusion impedance of lithium ions. Furthermore, controlling formation of a SEI film with a relatively high lithium fluoride content on the negative electrode surface provides it with a higher surface energy, promoting uniform deposition of lithium ions and inhibiting growth of dendrites. Finally, the related technologies further disclose using other types of solvents to replace carboxylic acid ester solvents, thereby improving the ionic conductivity of the electrolyte, reducing interface impedance, and thus enhancing the fast-charging performance of the battery.

Based on the above improvement measures, at present, there are still some problems under a condition of high-rate fast charging of batteries: (1) the resistance and polarization of the battery are relatively large, making it difficult to shorten a fast charging time and further improve the fast charging performance; (2) the viscosity of an electrolyte system increases at a low temperature, which can easily lead to lithium plating under a fast charging condition, resulting in poor power performance of the battery; (3) during a battery formation process at room temperature, lithium ions and solvent molecules are co-embedded in a negative electrode carbon material, and the solvent molecules entering the negative electrode material will undergo oxidation-reduction reactions with the negative electrode material, generating stress that damages a structure of the negative electrode carbon material, resulting in pulverization of the material and a significant degradation in the cycling performance and storage performance of the battery; (4) an ability to improve the conductivity of the electrolyte using conventional solvents/lithium salts (such as LIFSI) is limited. The improvement on the fast-charging performance of thick electrodes is not significant, and a risk of lithium plating is easy to occur; and (5) adding ester co-solvents can improve ionic conductivity and low-temperature performance, but their compatibility with graphite materials is poor, and a risk of gas generation will also increase, making it impossible to guarantee the electrical performance and safety performance of the battery.

Therefore, in the art, there is an urgent need to develop an electrolyte system that not only has high ionic conductivity, low interface impedance and good stability, but also can improve fast charging performance of a battery.

### SUMMARY

The following is an overview of a subject matter described in detail herein. The overview is not intended to limit the scope of protection of claims.

To address the shortcomings of the prior art, an objective of the present application is to provide a non-aqueous electrolyte and a fast-charging secondary battery. The non-aqueous electrolyte provided in the present application is suitable for fast-charging and wide-temperature secondary battery systems, exhibits good compatibility with electrodes, and can significantly inhibit battery gas generation, thereby improving cycling performance of the battery at room temperature, high temperature, and low temperature.

To achieve the objective of the present application, the present application adopts following technical solution:
In the first aspect, the present application provides a non-aqueous electrolyte, and the non-aqueous electrolyte includes a primary injection electrolyte and a secondary injection electrolyte;
wherein the primary injection electrolyte includes a mixed lithium salt, a carboxylic acid ester solvent, and a primary additive, the primary additive includes vinylene carbonate and fluoroethylene carbonate, based on a mass of the primary injection electrolyte, a mass percentage content of the vinylene carbonate is A%, and a mass percentage content of the fluoroethylene carbonate is B%, satisfying:
a value of A+B ranges from 1 to 6;
the secondary injection electrolyte includes a secondary additive, the secondary additive includes vinylene carbonate, based on a mass of the secondary injection electrolyte, a mass percentage content of the vinylene carbonate is C%, satisfying:
   a value of (A+B)/C ranges from 0.06 to 0.48.

Firstly, the non-aqueous electrolyte provided in the present application not only has a characteristic of weak solvation binding energy, but also has relatively high ionic conductivity at low temperatures. At high rates, solvated lithium ions can be quickly desolvated and embedded in a graphite interlayer, thus exhibiting good fast-charging performance. Secondly, the non-aqueous electrolyte provided in the present application can form a stable SEI film at a negative electrode interface, thereby inhibiting side reactions at an interface between the electrolyte and the negative electrode material, reducing the generation of gases such as hydrogen fluoride, improving the problems, such as volume expansion and rapid capacity degradation of the battery during cycling/high-temperature storage, and meeting usage requirements of fast charging for 25-30 min. Finally, the non-aqueous electrolyte provided in the present application has good solubility and does not affect the dissociation of lithium salts, thus comprehensively improving the energy density, power density, and cycling performance of the battery.

In the present application, by controlling the compositions of the primary injection electrolyte and the secondary injection electrolyte, the electrical performance of the battery can be enhanced without increasing the interface impedance, and the gas generation is inhibited. This solves the problems of poor oxidation stability of carboxylic acid ester solvents and gas generation while improving the cycling performance.

In the present application, the value of A+B ranges from 1 to 6, for example, the value can be 1, 1.2, 1.5, 1.8, 2, 2.2, 2.5, 2.8, 3, 3.2, 3.5, 3.8, 4, 4.2, 4.5, 4.8, 5, 5.2, 5.5, 5.8, or 6.

In the present application, by controlling the value range of A+B, the additive can preferentially reduce and form a film on the negative electrode over solvents during a battery pre-charging stage, protecting the electrolyte from reduction and decomposition, thus improving the cycling performance of the battery and reducing gas generation. The value that is too small will shorten cycle life of the battery and increase gas generation, while the value that is too large will cause a sharp drop in room temperature cycling performance.

In the present application, the value of (A+B)/C ranges from 0.06 to 0.48, for example, the value can be 0.06, 0.09, 0.1, 0.12, 0.15, 0.19, 0.2, 0.22, 0.24, 0.28, 0.3, 0.32, 0.35, 0.38, 0.4, 0.42, 0.45, or 0.48.

In the present application, by controlling the value range of (A+B)/C, the cycle life of the battery is improved, while gas generation is inhibited. The value that is too small will result in a thicker initial SEI film, excessively high DC resistance, insufficient room temperature cycling kinetics, and a phenomenon of lithium plating. Conversely, the value that is too large will not be able to meet the SEI repair requirements during cycling, leading to a sharp drop in performance in a later stage of cycling.

In an embodiment, the value of A+B ranges from 2 to 4, for example, the value of A+B can be 2, 2.2, 2.5, 2.8, 3, 3.2, 3.5, 3.8, or 4.

In an embodiment, the value of (A+B)/C ranges from 0.16 to 0.35, for example, the value of (A+B)/C can be 0.16, 0.18, 0.2, 0.22, 0.25, 0.28, 0.3, 0.32, or 0.35.

In an embodiment, based on a mass of the non-aqueous electrolyte, the value of A+C/B ranges from 4 to 6, further optionally from 4.5 to 5.5, for example, the value of A+C/B can be 4, 4.2, 4.5, 4.8, 5, 5.2, 5.5, 5.8, or 6.

In the present application, by controlling the value range of A+C/B, the battery can achieve an effect of improving cycling performance and inhibiting gas generation while maintaining a relatively small DC resistance. The value that is too small will result in the SEI film to be irreparable in the later stage of cycling, leading to poor cycling performance and more gas generation in the later stage. Conversely, the value that is too large will result in excessively high initial DC resistance, insufficient cycling kinetics at room temperature, and a phenomenon of lithium plating and a sharp drop in advance.

In an embodiment, the mixed lithium salt in the primary injection electrolyte includes a main salt and an auxiliary salt.

In the present application, adding the auxiliary salt can improve the conductivity and ion migration number of the primary injection electrolyte, making it have better low-temperature discharge and high-temperature performance. An assembled battery has a longer cycle life and a wider application temperature range, allowing the battery to be used in a lower temperature range.

In an embodiment, the main salt includes lithium hexafluorophosphate.

In an embodiment, the auxiliary salt includes any one or a combination of at least two of lithium bis(fluorosulfonyl)imide, lithium bis(trifluoromethanesulfonyl)imide, lithium tetrafluoroborate, lithium trifluoromethanesulfonate, lithium difluoro(oxalato)borate, or lithium bis(oxalato)difluorophosphate;
In an embodiment, a mass ratio of the main salt to the auxiliary salt is (1.3-4):1, further optionally (1.5-3.9):1, for example, the mass ratio can be 1.3:1, 1.5:1, 1.8:1, 2:1, 2.2:1, 2.5:1, 2.8:1, 3:1, 3.2:1, 3.5:1, 3.8:1, 3.9:1, 4:1.

In the present application, by controlling the mass ratio of the main salt to the auxiliary salt, the conductivity and ion migration number of the electrolyte reach an optimal state, thereby improving the fast-charging performance of the battery and enhancing high-temperature cycling performance. The mass ratio that is too small will result in degraded safety performance of the battery and excessively high cost. Conversely, the mass ratio that is too large will result in a low ionic migration number of the electrolyte, insufficient kinetics and lithium plating at room temperature, degraded high-temperature performance of the battery, etc.

In an embodiment, the carboxylic acid ester solvent includes ethyl acetate and/or ethyl propionate.

The present application, by selecting ethyl acetate and/or ethyl propionate, which have the advantages of low viscosity, low freezing point, high dielectric constant, etc., the electrolyte possesses the advantages of high electrical conductivity, wide liquid range and good fast charging performance.

In an embodiment, based on a total mass of the primary injection electrolyte as 100%, a mass percentage content of the carboxylic acid ester solvent is 15%-70%, further optionally 20%-45%. For example, the mass percentage content can be 15%, 18%, 20%, 22%, 25%, 28%, 30%, 32%, 35%, 38%, 40%, 42%, 45%, 48%, 50%, 52%, 55%, 58%, 60%, 62%, 65%, 68%, or 70%.

In the present application, by controlling the mass percentage content of carboxylic acid ester solvents, ion transport performance of the electrolyte is improved, meeting the fast-charging performance under thick electrodes. The mass percentage content that is too small will lead to a relatively high viscosity of the battery, a low electrical conductivity, and degraded room-temperature cycling. Conversely, the mass percentage content that is too large will deteriorate the safety performance of the battery.

In an embodiment, the secondary injection electrolyte further includes a lithium salt and a non-aqueous solvent.

In an embodiment, the lithium salt includes any one or a combination of at least two of lithium hexafluorophosphate, lithium bis(fluorosulfonyl)imide, lithium bis(trifluoromethanesulfonyl)imide, lithium tetrafluoroborate, lithium trifluoromethanesulfonate, or lithium difluoro(oxalato)borate.

In an embodiment, the non-aqueous solvent includes a carboxylic acid ester solvent.

In an embodiment, the carboxylic acid ester solvent includes any one or a combination of at least ethylene carbonate, ethyl methyl carbonate, dimethyl carbonate, diethyl carbonate, or propylene carbonate.

In an embodiment, a mass ratio of the primary injection electrolyte to the secondary injection electrolyte is (60-95): (5-40), further optionally (75-90): (10-25). For example, the mass ratio can be 60:40, 62:38, 65:35, 68:32, 70:30, 75:25, 80:20, 85:15, 90:10, or 95:5.

In the second aspect, the present application provides a fast-charging secondary battery, the fast-charging secondary battery includes a positive electrode, a negative electrode, an electrolyte and a separator. The electrolyte includes the non-aqueous electrolyte according to the first aspect.

In an embodiment, the negative electrode includes a current collector and a negative electrode active material layer provided on at least one side of the current collector.

In an embodiment, an average particle size of a negative electrode active material in the negative electrode active material layer is 13 µm-14 µm, for example, the average particle size can be 13 µm, 13.2 µm, 13.5 µm, 13.8 µm, or 14 µm.

In an embodiment, a specific surface area of a negative electrode active material in the negative electrode active material layer is 0.5 m²/g-2.0 m²/g, for example, the specific surface area can be 0.5 m²/g, 0.8 m²/g, 1.0 m²/g, 1.2 m²/g, 1.5 m²/g, 1.8 m²/g, or 2.0 m²/g.

Compared with the prior art, the present application has following beneficial effects:
The present application provides a non-aqueous electrolyte. Firstly, the non-aqueous electrolyte provided in the present application not only has a characteristic of weak solvation binding energy, but also has relatively high ionic conductivity at low temperatures. At high rates, solvated lithium ions can be quickly desolvated and embedded in a graphite interlayer, thus exhibiting good fast-charging performance. Secondly, the non-aqueous electrolyte provided in the present application can form a stable SEI film at a negative electrode interface, thereby inhibiting side reactions at an interface between the electrolyte and the negative electrode material, reducing the generation of gases such as hydrogen fluoride, improving the problems, such as volume expansion and rapid capacity degradation of the battery during cycling/high-temperature storage, and meeting usage requirements of fast charging for 25-30 min. Finally, the non-aqueous electrolyte provided in the present application has good solubility and does not affect dissociation of lithium salts, thus comprehensively improving the energy density, power density, and cycling performance of the battery.

In the present application, by controlling the compositions of the primary injection electrolyte and the secondary injection electrolyte, the electrical performance of the battery can be enhanced without increasing the interface impedance, and the gas generation is inhibited. This solves the problems of poor oxidation stability of carboxylic acid ester solvents and gas generation while improving the cycling performance.

After reading and understanding the detailed description, other aspects can be understood.

### DETAILED DESCRIPTION OF EMBODIMENTS

The technical solution of the present application will be further illustrated below through specific embodiments. Those skilled in the art should understand that the embodiments are merely intended to assist in understanding the present application and should not be regarded as specific limitations of the present application.

### Example 1

The present example provided a non-aqueous electrolyte, and the non-aqueous electrolyte included a primary injection electrolyte and a secondary injection electrolyte.

The primary injection electrolyte included a mixed lithium salt, a carboxylic acid ester solvent, and a primary additive. The primary additive included vinylene carbonate and fluoroethylene carbonate; and based on a mass of the primary injection electrolyte, a mass percentage content of the vinylene carbonate was A%, and a mass percentage content of the fluoroethylene carbonate was B%, satisfying: a value range of A+B was 3.

The secondary injection electrolyte included lithium hexafluorophosphate, a non-aqueous solvent and a secondary additive. The secondary additive included vinylene carbonate, and based on a mass of the secondary injection electrolyte, a mass percentage content of the vinylene carbonate was C%, satisfying: a value range of (A+B)/C was 0.24.

Based on a mass of the non-aqueous electrolyte, a value range of A+C/B was 4.77.

The preparation method of the non-aqueous electrolyte was as follows:
In a glove box filled with argon (water content < 1ppm, and oxygen content < 1ppm), the primary injection electrolyte: ethylene carbonate (EC), ethyl methyl carbonate (EMC), dimethyl carbonate (DMC), and ethyl acetate (EA) was mixed uniformly in a volume ratio of 25:25:20:30. Based on a total mass of the primary injection electrolyte as 100%, a mass percentage content of ethyl acetate was 20.71%. Subsequently, LIPF₆ and LIFSI with a mass ratio of 1.52 were added. A mass percentage content of the primary additive was 3%, a mass percentage content of LIDFOB was 0.5%, and a mass percentage content of ethylene sulfate was 1%. The above components were mixed uniformly to obtain the primary injection electrolyte. Using a secondary liquid injection technology, a mass ratio of the primary injection electrolyte to the secondary injection electrolyte was 90:10. Based on a total mass of the secondary injection electrolyte as 100%, a mass percentage content of LIPF₆ was 12.5%. The composition of the non-aqueous solvent was EC: EMC: DMC with a volume ratio of 30: 40: 30. The above components were mixed uniformly to obtain the secondary injection electrolyte.

### Example 2

The difference between the present example and Example 1 was that the mass ratio of LIPF₆ to LIFSI was 3.86. The rest was the same as in Example 1.

### Example 3

The difference between the present example and Example 1 was that the mass ratio of LIPF₆ to LIFSI was 1.89. The rest was the same as in Example 1.

### Example 4

The difference between the present example and Example 1 was that the mass ratio of LIPF6 to LIFSI was 3.25. The rest was the same as in Example 1.

### Example 5

The difference between the present example and Embodiment 1 was that, based on a total mass of the primary injection electrolyte as 100%, the mass percentage content of ethyl acetate solvent was 37.12%. The rest was the same as in Example 1.

### Example 6

The difference between the present example and Embodiment 1 was that, based on a total mass of the primary injection electrolyte as 100%, the mass percentage content of ethyl acetate solvent was 46.40%. The rest was the same as in Example 1.

### Example 7

The difference between the present example and Embodiment 1 was that, based on a total mass of the primary injection electrolyte as 100%, the mass percentage content of ethyl acetate solvent was 55.68%. The rest was the same as in Example 1.

### Example 8

The difference between the present example and Embodiment 1 was that, based on a total mass of the primary injection electrolyte as 100%, the mass percentage content of ethyl acetate solvent was 64.96%. The rest was the same as in Example 1.

### Example 9

The difference between the present example and Example 1 was that in the secondary injection electrolyte, the value range of (A+B)/C was 0.19. The rest was the same as in Example 1.

### Example 10

The difference between the present example and Example 1 was that in the primary injection electrolyte, the value range of A+B was 4. The rest was the same as in Example 1.

### Comparative Example 1

The difference between the present comparative example and Example 1 was that no carboxylic acid ester solvent was added to the primary injection electrolyte, wherein the volume ratio of ethylene carbonate (EC)/ ethyl methyl carbonate (EMC)/dimethyl carbonate (DMC) was 25:45:30. The rest was the same as in Example 1.

### Comparative Example 2

The difference between the present comparative example and Example 1 was that the electrolyte salt was a single salt system of LIPF₆ with a mass percentage content of 14.38%. The rest was the same as in Example 1.

### Comparative Example 3

The difference between the present comparative example and Example 1 was that in the primary injection electrolyte, the value range of A+B was 0.5. The rest was the same as in Example 1.

### Comparative Example 4

The difference between the present comparative example and Example 1 was that in the secondary injection electrolyte, the value range of (A+B)/C was 0.68. The rest was the same as in Example 1.

### Comparative Example 5

The difference between the present comparative example and Example 1 was that in the secondary injection electrolyte, the value range of (A+B)/C was 0.05. The rest was the same as in Example 1.

### Comparative Example 6

The difference between the present comparative example and Example 1 was that no secondary injection electrolyte was used. The rest was the same as in Example 1.

### Comparative Example 7

The difference between the present comparative example and Example 1 was that no secondary injection electrolyte was used, and based on a total mass of the primary injection electrolyte as 100%, 0.5% of 1.3-propane sultone was added to the primary injection electrolyte. The rest was the same as in Example 1.

### Application Example 1 to Application Example 10 and Comparative Application Example 1 to Comparative Application Example 7

The non-aqueous electrolytes provided in Example 1 to Example 10 and Comparative Example 1 to Comparative Example 7 were assembled into lithium-ion batteries. The preparation method was as follows:

### (1) Preparation of positive electrode sheet:

A lithium iron phosphate positive electrode material, conductive carbon black, a binder and a dispersant were added to N-methylpyrrolidone (NMP) in a mass ratio of 96.9:1.5:1.5:0.1. After thorough stirring and uniform mixing, a positive electrode slurry (with a solid content of 58%) was obtained. The slurry was evenly coated on a positive electrode current collector to obtain a positive electrode roll with an areal density of 25 mg/cm² of a single-side positive electrode sheet. After drying and rolling and cutting, a positive electrode sheet was obtained.

### (2) Preparation of negative electrode sheet:

A negative electrode active material (artificial graphite with an average particle size of 14 µm and a BET specific surface area of the material of 2.0 m²/g), conductive carbon black, styrene-butadiene rubber (SBR) binder, and sodium carboxymethyl cellulose (CMC-Na) thickener were dissolved in deionized water solvent, in a weight ratio of 96.1:1.0:1.1:1.8. After uniform mixing, a negative electrode slurry (with a solid content of 48%) was obtained. The negative electrode slurry was evenly coated on a copper foil in two layers simultaneously. After drying and rolling and cutting, a negative electrode sheet was obtained.

### (3) Separator

Commercialized polypropylene film was adopted, and ceramic layers were coated on both sides of the polypropylene film.

### (4) Battery assembly

The positive electrode sheet, the separator and the negative electrode sheet were arranged in sequence. An electrode group was obtained by using a rapid stacking technology. The electrode group was welded into a shell (aluminum-plastic film) through the positive and negative tabs. After side sealing, top sealing, and drying, the electrolyte was injected (4Ah and injection coefficient of 3.3 g/Ah). After subjecting to processes such as standing, pre-charging, secondary electrolyte injection and formation, a lithium-ion battery was obtained.

### Test conditions

The lithium-ion batteries provided in Application Example 1 to Application Example 10 and Comparative Application Example 1 to Comparative Application Example 7 were tested. Testing methods were as follows:

### (1) 60 °C high-temperature storage test

The batteries after capacity grading were subjected to high-temperature storage experiments. Firstly, the batteries were charged and discharged three times at 0.33C/1C (3.65/2.0V) at room temperature (the last discharge capacity was recorded as D_{C0}). Then, fully charged (DOD=100SOC%) cells were placed in a 60 °C oven for storage for 30 days, followed by standing at room temperature for 4 h after removal, a 1C discharge at room temperature (recorded as D_{C1}), and 3 charge/discharge cycles were performed. Capacity of the last discharge was record as D_{C2}. Capacity retention rate and recovery rate of the lithium-ion battery were calculated.

### (2) Cycle test and gas generation test:

Under conditions of 25 °C and 45 °C, the above 20 cells were subjected to a 10-80% SOC-25min step-cycle (1.6C fast charging) until reaching 3.65 V, and then subjected to a constant current discharge at a rate of 1C to 2.0 V.

The test results are shown in Table 1:

**Table 1**

| Example | Mass Ratio of Main Salt to Auxiliary Salt | Carboxylic Acid Ester | Primary Additive | Secondary Injection Electrolyte | Non-Aqueous Electrolyte | Stored at 60 ° C for 90 days | | | 1.6 ° C Cycle | | |
|---|---|---|---|---|---|---|---|---|---|---|---|
| | W₁/W₂ | Mass percentage content of W₁/W₂ (%) | A+B | (A+B)/ C | A+C/B | Capacity Retention Rate (%) | Capacity Recovery Rate (%) | Gas Generation (mL/Ah) | 25°C | 45°C | Gas Evolution (mL/ Ah) |
| Application Example 1 | 1.52 | 20.71 | 3 | 0.24 | 4.77 | 89.7 | 90.9 | 0.57 | 2100 | 2250 | 0.67 |
| Application Example 2 | 3.86 | 20.86 | 3 | 0.24 | 4.77 | 89.5 | 90.7 | 0.5 | 2089 | 2135 | 0.61 |
| Application Example 3 | 1.89 | 21.27 | 3 | 0.24 | 4.77 | 89.1 | 90.4 | 0.51 | 1980 | 2038 | 0.62 |
| Application Example 4 | 3.25 | 21.34 | 3 | 0.24 | 4.77 | 89.0 | 90.2 | 0.51 | 2089 | 2135 | 0.61 |
| Application Example 5 | 1.52 | 37.12 | 3 | 0.24 | 4.77 | 89.5 | 90.7 | 0.61 | 2124 | 2421 | 0.63 |
| Application Example 6 | 1.52 | 46.40 | 3 | 0.24 | 4.77 | 89.3 | 90.5 | 0.62 | 2145 | 2350 | 0.65 |
| Application Example 7 | 1.52 | 55.68 | 3 | 0.24 | 4.77 | 89.0 | 90 | 0.64 | 2189 | 2270 | 0.67 |
| Application Example 8 | 1.52 | 64.96 | 3 | 0.24 | 4.77 | 88.8 | 89.9 | 0.67 | 2200 | 2156 | 0.72 |
| Application Example 9 | 1.52 | 20.71 | 3 | 0.19 | 5.48 | 89.9 | 91.2 | 0.69 | 2153 | 2474 | 0.74 |
| Application Example 10 | 1.52 | 20.45 | 4 | 0.32 | 5.77 | 89.5 | 90.7 | 0.67 | 2124 | 2478 | 0.72 |
| Comparative Application Example 1 | 1.52 | / | 3 | 0.24 | 4.77 | 89.7 | 91.2 | 0.47 | 547 | 873 | 0.67 |
| Comparative Application Example 2 | / | 21.01 | 3 | 0.24 | 4.77 | 87.6 | 88.2 | 0.72 | 1734 | 1878 | 0.82 |
| Comparative Application Example 3 | 1.52 | 21.35 | 0.5 | 0.12 | 31.70 | 65.2 | 67.4 | 2.25 | 432 | 376 | 2.43 |
| Comparative Application Example 4 | 1.52 | 20.71 | 3 | 0.68 | 2.97 | 82.7 | 83.9 | 1.57 | 1276 | 785 | 1.87 |
| Comparative Application Example 5 | 1.52 | 20.71 | 3 | 0.05 | 15.17 | 80.5 | 81.7 | 0.67 | 576 | 935 | 0.82 |
| Comparative Application Example 6 | 1.52 | 20.71 | 3 | / | / | 74.5 | 76.1 | 1.54 | 1895 | 1020 | 2.03 |
| Comparative Application Example 7 | 1.52 | 20.71 | 3 | ps | / | 76.8 | 78.9 | 1.23 | 1769 | 1067 | 1.87 |

As can be seen from Table 1, following conclusions are drawn:
(1) From data of the above examples and comparative example, it can be seen that in a high-energy fast charging test, the energy density of Application Example 1, Application Example 5 and Comparative Application Example 1 reaches 195 Wh/Kg. When the areal density of a single-sided positive electrode sheet is 25 mg/cm ², the fast charging performance of the battery can be significantly improved after using the carboxylic acid ester solvent, thereby ensuring that the electrochemical performance at a rate of 1.6 C does not experience a drop in both room temperature and high temperature performance.
(2) By comparing Application Examples 1-10 with Comparative Application Example 2, when using a dual-salt system is used for the lithium salts in the primary injection electrolyte and adjusting the mass ratio range of the main salt to the auxiliary salt is controlled within the preferred range of 1.5 to 3.9, combined with the use of the carboxylic acid ester solvents, cycling performance and high-temperature storage capacity retention rate of the battery are both superior. When the content of the carboxylic acid ester solvent increases, the fast charging performance of the battery at 25 °C is improved, but the corresponding high-temperature cycling performance and high-temperature storage performance are degraded to a certain extent.
(3) By comparing Application Example 1 with Comparative Application Example 6, when the secondary liquid injection technology is used, the high-temperature storage/cycling performance of the cell can be significantly improved, and the gas generation of the battery can be significantly inhibited.
(4) By comparing Application Example 1 and Application Examples 5-8, when the content of the carboxylic acid ester solvent gradually increases, the viscosity of the electrolyte decreases and the ionic conductivity ncreases. At the same time, the dissociation migration rate of lithium ions is improved to a certain extent, and the room-temperature cycling performance of the battery is enhanced. However, the high-temperature cycling performance of the battery is poor, and the gas generation of the battery slightly increases. However, the comprehensive performance is superior to that of the Comparative Application Example 1.
(5) By comparing Application Example 1 with Comparative Application Example 3, Comparative Application Example 4 and Comparative Application Example 5, when a content of the FEC additive is reduced, the value of A+C/B is greater than 6, resulting in a loose and thin film formation on the negative electrode and a poor cycling stability of the battery. When a content of the VC additive in the second injection is relatively high, an initial film-forming impedance of the cell is relatively high, resulting in insufficient kinetic performance during a room-temperature cycle and the occurrence of a phenomenon of lithium plating, causing a sharp drop in performance. Conversely, if the content of the VC additive in the second injection is relatively low, the resulting electrolyte is insufficient to repair the loss of the SEI film during a cycle process, leading to a slightly poor room-temperature performance and high-temperature cycling performance of the battery, as well as increased gas generation.
(6) By comparing Application Example 1 with Comparative Application Example 6 and Comparative Application Example 7, after using the additive 1.3-propane sultone to suppress gas generation, the gas generation of the battery can be inhibited to a certain extent without injection of the secondary injection electrolyte. However, the comprehensive performance of the batteries provided in Comparative Application Examples 6-7 is inferior to that of the battery provided in Application Example 1.

The applicant declares that the present application illustrates the process method of the present application through the above embodiments, but the present application is not limited to the above process steps, that is, it does not mean that the present application must rely on the above process steps to be implemented. Those skilled in the art should understand that any improvement to the present application, equivalent substitution of raw materials selected for the present application, addition of auxiliary components, and selection of specific methods, etc., all fall within the scope of protection and application of the present application.

## Claims

1. A non-aqueous electrolyte, comprising a primary injection electrolyte and a secondary injection electrolyte;
wherein the primary injection electrolyte comprises a mixed lithium salt, a carboxylic acid ester solvent, and a primary additive, the primary additive comprises vinylene carbonate and fluoroethylene carbonate, and based on a mass of the primary injection electrolyte, a mass percentage content of the vinylene carbonate is A%, and a mass percentage content of the fluoroethylene carbonate is B%, satisfying:
a value of A+B ranges from 1 to 6; and
the secondary injection electrolyte comprises a secondary additive, the secondary additive comprises vinylene carbonate; and based on a mass of the secondary injection electrolyte, a mass percentage content of the vinylene carbonate is C%, satisfying:
a value of (A+B)/C ranges from 0.06 to 0.48.

2. The non-aqueous electrolyte according to claim 1, wherein the value of A+B ranges from 2 to 4; and
optionally, the value of (A+B)/C ranges from 0.16 to 0.35.

3. The non-aqueous electrolyte according to claim 1 or 2, wherein, based on a mass of the non-aqueous electrolyte, the value of A+C/B ranges from 4 to 6, further optionally from 4.5 to 5.5.

4. The non-aqueous electrolyte according to any one of claims 1 to 3, wherein the mixed lithium salt in the primary injection electrolyte comprises a main salt and an auxiliary salt;
optionally, the main salt comprises lithium hexafluorophosphate;
optionally, the auxiliary salt comprises any one or a combination of at least two of lithium bis(fluorosulfonyl)imide, lithium bis(trifluoromethanesulfonyl)imide, lithium tetrafluoroborate, lithium trifluoromethanesulfonate, lithium difluoro(oxalato)borate, or lithium bis(oxalato)difluorophosphate; and
Optionally, a mass ratio of the main salt to the auxiliary salt is (1.3-4):1, further optionally (1.5-3.9):1.

5. The non-aqueous electrolyte according to any one of claims 1 to 4, wherein the carboxylic acid ester solvent comprises ethyl acetate and/or ethyl propionate; and
optionally, based on a total mass of the primary injection electrolyte as 100%, a mass percentage content of the carboxylic acid ester solvent is 15%-70%, further optionally 20%-45%.

6. The non-aqueous electrolyte according to any one of claims 1 to 5, wherein the secondary injection electrolyte further comprises a lithium salt and a non-aqueous solvent.

7. The non-aqueous electrolyte according to any one of claims 1 to 6, wherein the lithium salt comprises any one or a combination of at least two of lithium hexafluorophosphate, lithium bis(fluorosulfonyl)imide, lithium bis(trifluoromethanesulfonyl)imide, lithium tetrafluoroborate, lithium trifluoromethanesulfonate, or lithium difluoro(oxalato)borate;
optionally, the non-aqueous solvent comprises a carboxylic acid ester solvent; and
optionally, the carboxylic acid ester solvent comprises any one or a combination of at least two of ethylene carbonate, ethyl methyl carbonate, dimethyl carbonate, diethyl carbonate, or propylene carbonate.

8. The non-aqueous electrolyte according to any one of claims 1 to 7, wherein a mass ratio of the primary injection electrolyte to the secondary injection electrolyte is (60-95): (5-40), further optionally (75-90): (10-25).

9. A fast-charging secondary battery, comprising a positive electrode, a negative electrode, an electrolyte, and a separator, wherein the electrolyte comprises the non-aqueous electrolyte according to any one of claims 1 to 8.

10. The fast-charging secondary battery according to claim 9, wherein the negative electrode comprises a current collector and a negative electrode active material layer provided on at least one side of the current collector;
optionally, an average particle size of a negative electrode active material in the negative electrode active material layer is 13 µm-14 µm; and
optionally, a specific surface area of a negative electrode active material in the negative electrode active material layer is 0.5 m²/g-2.0 m²/g.
